Europäisches Patentamt

European Patent Office

Office européen des brevets

(19)

(11) Veröffentlichungsnummer : **0 060 309**
**B1**

(12)
# EUROPÄISCHE PATENTSCHRIFT

(45) Veröffentlichungstag der Patentschrift :
21.11.85

(51) Int. Cl.⁴ : **F 16 L 37/08, F 16 L 17/02**

(21) Anmeldenummer : 81101850.6

(22) Anmeldetag : 12.03.81

(54) Steckmuffe.

(43) Veröffentlichungstag der Anmeldung :
22.09.82 Patentblatt 82/38

(45) Bekanntmachung des Hinweises auf die Patenterteilung : 21.11.85 Patentblatt 85/47

(84) Benannte Vertragsstaaten :
AT BE CH DE FR GB IT LI NL SE

(56) Entgegenhaltungen :
EP-A- 0 002 118
CH-A-   541 763
CH-A-   581 289
DE-A- 2 453 502
DE-A- 2 558 048
DE-A- 2 939 081
NL-A- 7 907 331
US-A- 3 877 733

(73) Patentinhaber : WOCO Franz-Josef Wolf & Co.
Sprudelallee 19
D-6483 Bad Soden-Salmünster (DE)

(72) Erfinder : Wolf, Franz Josef
Sprudelallee 19
D-6483 Bad Soden-Salmünster (DE)
Erfinder : Kaminski, Peter
Am Rausch 4
D-6460 Gelnhausen 4 (DE)

(74) Vertreter : Jaeger, Klaus, Dr.rer.nat. Dipl.-Chem. et al
Jaeger, Grams & Pontani Patentanwälte Bergstrasse
48 1/2
D-8035 München-Gauting (DE)

## Beschreibung

Die Erfindung betrifft eine Steckmuffe gemäß Oberbegriff des Anspruches 1.

Steckmuffen vergleichbarer Art können insbesondere in Form einer Glockenmuffe oder in Form einer zumindest im wesentlichen zylindrischen, an beiden Stirnseiten offenen Hülse zum dichten Verbinden von zwei muffenlosen Rohrenden, sogenannten Rohrspitzenden, ausgebildet sein. Die Steckmuffe weist jeweils in ihrem Kragenbereich, also im Bereich ihres äußeren offenen Randes, innen mindestens ein ringförmiges Dichtungselement, das im folgenden kurz als « Dichtungsring » bezeichnet ist, auf. Vergleichbare Steckmuffen sind beispielsweise aus den folgenden Druckschriften bekannt : EP-A-0 002 118, DE-A-2 453 502 und DE-A-2 558 048. Nachteilig an den in dieser Art konzipierten bekannten Steckmuffen ist ihre geringe Scherlastfestigkeit, ihre geringe Quersteifigkeit und die übergroße Belastung der ringförmigen Dichtungselemente bei Scherlast oder einwirkenden Knickkräften.

Unter Scherlastfestigkeit wird dabei der Widerstand der Rohrsteckverbindung zwischen dem Rohrspitzende und der Steckmuffe gegen ein Parallelversetzen der Achsen des Rohres und der Steckmuffe bei radial einwirkenden Kräften verstanden.

Unter Quersteifigkeit wird dabei der Widerstand verstanden, den die aus dem Rohrspitzende und der Steckmuffe bestehende Rohrsteckverbindung der Einwirkung von Knickkräften entgegensetzt, also von Kräften, die die Achse des Rohrspitzendes und die Achse der Steckmuffe gegeneinander abzuwinkeln trachten.

Die Probleme der Scherlastfestigkeit und der Quersteifigkeit werden bei solchen Rohrsteckverbindungen um so größer, je größer die fertigungsbedingten Toleranzen der Durchmesser der Steckmuffe und des Rohrspitzendes sind, die im Bereich der Rohrsteckverbindung berücksichtigt und aufgenommen werden müssen. Je größer diese Toleranzen sind, desto größer muß der mittlere Nennabstand zwischen dem Außenmantel des Rohrspitzendes und dem Innenmantel der Steckmuffe bemessen werden. Um so größer wird aber das anschlagfreie Spiel der Steckmuffe des Rohrspitzendes, also der beiden Elemente der Rohrsteckverbindung, gegeneinander. Scherlasten und Knickkräfte, die auf die Rohrsteckverbindung einwirken, müssen dabei ausschließlich oder zumindest überwiegend von den ringförmigen Dichtungselementen aufgefangen werden. Dies führt zu einer Ermüdung des Werkstoffs der gummielastischen Dichtungselemente, führt zu Undichtheiten im unbelasteten Scheitel der Steckverbindung und erfordert den Einsatz konstruktiv aufwendiger und materialaufwendiger Dichtungselemente.

Die aus der gattungsbildenden DE-A-2 939 081 bekannte Steckmuffe weist einen Stützring mit Federzungen auf, der sich im wesentlichen nur axial in die Steckmuffe hinein in Richtung zum Muffenspiegel erstreckt. Nur am axial inneren Endbereich sind diese Federzungen etwas materialverstärkt ausgebildet, so daß hierdurch ein geringfügig kleinerer lichter Innendurchmesser entsteht als an der stirn- bzw. kragenseitigen Öffnung des Stützringes vorhanden ist. Dieser bekannte Stützring eignet sich daher nur zur Überbrückung eines relativ kleinen Fertigungstoleranzbereiches für den Außendurchmesser des einzusetzenden Rohrspitzendes. Ein Rohrspitzende mit einem gerade noch zulässigen maximalen Außendurchmesser kann daher nur unter erheblichem Kraftaufwand, der für die Materialverpressung der Federzungen gegen die radiale Innenwand der Hülse erforderlich ist, in die Steckmuffe eingeschoben werden.

Ausgehend von diesem Stand der Technik liegt der Erfindung die Aufgabe zugrunde, eine gattungsgemäße Steckmuffe zu schaffen, die insbesondere bei einem größeren Fertigungstoleranzbereich für den Außendurchmesser des Rohrspitzendes eine verbesserte Scherlastfestigkeit und Quersteifigkeit unter gleichzeitiger Entlastung und ggfl. zuverlässiger axialer Fixierung der Dichtungselemente aufweist.

Diese Aufgabe wird bei einer gattungsgemäßen Steckmuffe durch die Merkmale des kennzeichnenden Teils des Anspruches 1 gelöst.

Kerngedanke der Erfindung ist es daher, den federelastischen Stützring V-förmig auszubilden und in der Weise zu haltern und anzuordnen, daß er sich zum Muffengrund hin axial einwärts öffnet.

Ein Schenkel der Federzungen steht dabei vorzugsweise zumindest im wesentlichen radial oder schwach axial einwärts geneigt, während der andere Schenkel der Federzunge eines solcherart V-förmig ausgebildeten federelastischen Stützringes im entspannten Zustand zumindest im wesentlichen axial steht. Beim Einstecken eines Rohrspitzendes wird der so ausgebildete federelastische Stützring dann gegen seine Spreizwirkung unter Aufprägung eines Biegemoments zusammengedrückt. Der dabei auf den axial stehenden Schenkel der Federzunge wirksame Druck nach radial auswärts, also gegen die Innenwand der Muffe ; wird vorzugsweise zum Einspannen von Halteorganen oder der Halterung dienenden Ringabschnitten für das ringförmige Dichtungselement verwendet, das axial in Richtung vom Muffenkragen zum Muffenspiegel gesehen hinter dem federelastischen Stützring, und zwar vorzugsweise dicht oder unmittelbar axial hinter dem Stützring, angeordnet ist. Wenn die Steckmuffe als Hülse zum Verbinden zweier Rohrspitzenden ausgebildet ist, ist diese Hülse vorzugsweise mit einer gummielastischen Dichtungselement-Manschette ausgekleidet, an die die ringförmigen Dichtungsringe einstückig angeformt sind. Das Dichtungselement kann dann gegen eine axiale Verschiebung durch die Halteelemente des federelastischen Stützringes fixiert und bei V-förmiger Ausbildung des federelastischen Stützringes bei eingestecktem Rohrspitzende zusätzlich radial fest eingespannt und gegen axiale Verschiebung beim Einschieben des Rohrspitzendes gesichert werden.

Wenn im Inneren der Steckmuffe gleichzeitig an sich bekannte Scherlaststützen angeordnet sind, ist das eingesteckte Rohrspitzende weitgehend federnd an zwei axial voneinander getrennten Ringbereichen abgestützt, zwischen denen die ringförmigen und meist gummielastischen Dichtungsringe angeordnet sind, die insbesondere bei dieser Art der Abstützung des Rohrspitzendes praktisch keinerlei Querkräfte oder Knickkräfte mehr aufzunehmen brauchen.

Der federelastische Stützring kann als separates Teil ausgebildet sein oder einstückig an der Steckmuffe angeformt sein. Ein einstückiges Anformen an der Steckmuffe ist dabei selbstverständlich nur dann möglich, wenn diese aus einem federelastischen oder einem federelastisch gestaltbaren Werkstoff besteht, beispielsweise also aus einem Metall oder federnd gestaltbarem Kunststoff. Der federelastische Stützring kann dann beispielsweise als axial einwärts zurückgebogener Rand der Steckmuffe, unter Ausbildung von Federzungen, ausgebildet sein. Wenn die Steckmuffe dagegen aus einem starren Material besteht, muß der federelastische Stützring selbstverständlich als separates Teil, beispielsweise aus Kunststoff oder Federstahl, hergestellt sein. Ein solcherart separat hergestellter federelastischer Stützring kann durch seine geometrische Gestalt sich selbst verkeilend oder verklemmend im Inneren der Steckmuffe gehaltert oder eingerastet sein oder kann an einen Haltering angeformt, an diesem befestigt oder einstückig mit diesem ausgebildet sein, der teleskopartig den Kragen der Steckmuffe außen übergreift. Ein solcher den Kragen außen teleskopartig übergreifender Haltering für den federelastischen Stützring ist vorzugsweise mit dem Außenmantel der Steckmuffe fest verbunden, beispielsweise durch Preßsitz, durch Verkleben oder Verschweißen oder durch Rastelemente, die nach Art einer Schnappverbindung blockierend einrasten und ein axiales Abziehen des Halteringes vom Kragen der Steckmuffe verhindern. Zur Ausbildung einer solchen Schnappverbindung sind im Kragen der Steckmuffe vorzugsweise Ausnehmungen oder Schlitze ausgebildet, in die komplementäre Rastnasen des Halteringes einrasten. Dabei kann der Haltering ebenfalls sowohl aus Kunststoff als auch aus Metall hergestellt sein.

Die Erfindung ist im folgenden an Hand eines Ausführungsbeispiels in Verbindung mit der Zeichnung näher erläutert. Es zeigen :

Figur 1 ein Ausführungsbeispiel der Steckmuffe in Teildarstellung, und zwar teils im Axialschnitt, teils in perspektivischer Darstellung, wobei der federelastische Stützring im entspannten Zustand gezeigt ist ; und

Figur 2 eine Darstellung der in Fig. 1 gezeigten Art mit den sich nach dem Einschieben des Rohrspitzendes in die Steckmuffe ergebenden Verformungskonturen.

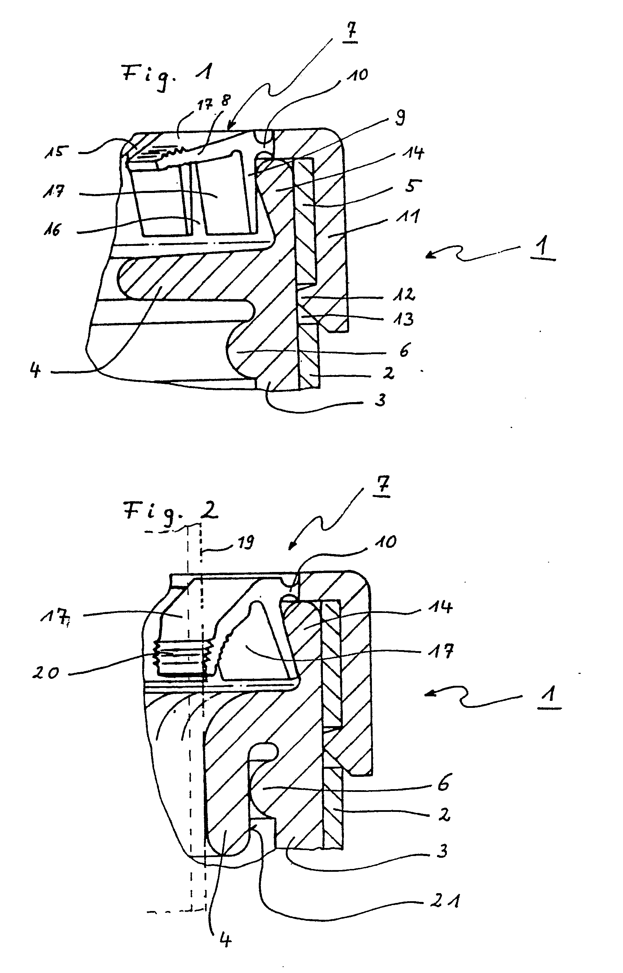

Das in der Fig. 1 im entspannten Zustand, also ohne eingestecktes Rohrspitzende, dargestellte Ausführungsbeispiel der Steckmuffe der Erfindung zeigt teils im Axialschnitt, teils in perspektivischer Darstellung einen Ausschnitt aus dem Kragenbereich einer Steckmuffe 1, die im wesentlichen zylindrisch mit zwei offenen Stirnseiten ausgebildet ist und aus einer formstabilelastischen Hülse 2 aus korrosionsbeständigem Stahlblech und einem als Innenauskleidung dienenden, aus Gummi bestehenden und als Manschette ausgebildetem Dichtungselement 3. Die Manschette hat eine Härte im Bereich von ungefähr 40 bis 70 Shore A.

Einstückig mit dem Dichtungselement 3 ist ein Dichtungsring 4 ausgebildet, dessen Dichtlippe in dem in Fig. 1 gezeigten entspannten Zustand des Systems im wesentlichen radial steht. In Richtung vom Kragen 5 der Steckmuffe 1 zu dem in den Figuren nicht dargestellten Muffenspiegel oder -grund gesehen axial hinter den Dichtungsring 4 ist eine Wulst 6 an dem Sichtungselement 3 angeformt, die bei eingestecktem Spitzende der Unterstützung der Dichtlippe und der Erhöhung des radialen Dichtungsdruckes dient.

Axial außen vor dem Dichtungsring 4 ist ein V-förmiger federelastischer Stützring 7 mit Federzungen 17 angeordnet, deren einer Schenkel 8 zumindest im wesentlichen radial, und dessen anderer Schenkel 9 zumindest im wesentlichen axial steht, und zwar axial einwärts verlaufend. Der federelastische Stützring 7 ist über einen Steg 10 mit gelenkiger Schwächung einstückig mit einem Haltering 11 verbunden, der den oberen Bereich des Kragens 5 der Hülse 2 der Steckmuffe 1 außen teleskopartig übergreift. Am axial vom Kragen der Steckmuffe her gesehen hinteren oder unteren Rand des Halteringes 11 sind nach innen vorspringende und in gleichem radialen Winkelabstand verteilte Rastnasen 12 ausgebildet, die in entsprechend angeordnete und ausgebildete schlitzartige Durchbrücke oder Öffnungen 13 eingreifen, die in der Hülse 2 der Steckmuffe 1 ausgebildet sind. Der Haltering 11 mit dem an diesem angeformten federelastischen Stützring 7 kann dadurch durch einfaches Aufschieben auf den Kragen der Steckmuffe axial fest und radial gegen Verdrehung gesichert mit dieser verbunden werden. Der federelastische Stützring 7 und der Haltering 11 bestehen aus Kunststoff, wobei der Haltering 11 so stark ausgebildet ist, daß er die aus Stahlblech gefertigte Hülse 2 versteift.

Ein bis unmittelbar an den äußeren Rand der Steckmuffe und der Hülse 2 heranreichender wulstartig verstärkter äußerer Ringabschnitt 14 des Dichtungselementes 3 liegt bei der in der Fig. 1 gezeigten entspannten Darstellung des Systems zunächst lose und nach eingeschobenem Rohrspitzende 19 (Fig. 2) axial fixiert und radial eingespannt zwischen der Außenwand des Schenkels 9 des federelastischen Stützringes 7, der Innenwand des Kragens 5 der Hülse 2 und dem Steg 10, der den federelastischen Stützring 7 mit dem Haltering 11 verbindet.

Die Federzungen 17 des V-förmigen federelastischen Stützringes 7 weisen in gleichmäßigem Abstand voneinander Einschnitte 15, 16 auf, durch die der Stützring 7 in einzelne Federzungen 17 unterteilt wird.

Im entspannten Zustand ist der kleinste lichte Innendurchmesser des federelastischen Stützringes 7, der durch die radial innenliegenden Kanten der Federzungen 17 bzw. des Schenkels 8 definiert ist, kleiner als der innerhalb eines Fertigungstoleranzbereiches kleinste zulässige Außendurchmesser des in die Steckmuffe einzusteckenden Rohrspitzendes. Das gleiche gilt selbstverständlich für den Innendurchmesser des Dichtungsringes 4.

Beim Einstecken des in der Fig. 2 der deutlicheren Darstellung halber lediglich durch die Konturlinie 19 seines Außenmantels angeordneten Rohrspitzendes in die Steckmuffe werden bei der angegebenen Bemessung zunächst die Schenkel 8 der Federzungen 17 des federelastischen Stützringes 7 und dann auch der Dichtungsring 4 nach axial einwärts umgebogen und verformt. Dabei sind auf der am Außenmantel des Rohrspitzendes 19 anliegenden Fläche der Federzunge 17 quer zur Einschubrichtung des Rohrspitzendes bzw. quer zur Längsachse der Steckmuffe 1 sägezahnartig profilierte Querrippen 20 angebracht, die ein unbeabsichtigtes Trennen des Rohrspitzendes von der Steckmuffe verhindern.

Beim Einschieben des Rohrspitzendes 19 (Fig. 2) wird zunächst der Steg 10 soweit verformt, bis die Außenwand des axialen Schenkels 9 der Federzunge 17 des federelastischen Stützringes 7 an der Innenwand des wulstartigen Ringabschnitts 14 des manschettenartigen Dichtungselementes 3 anliegt. Bei weiterem Einschieben des Rohrspitzendes 19 und zunehmender radialer Aufweitung des durch die Federzungen 17 definierten Stützringes wird auf die Schenkel 9 ein Biegemoment aufgebracht, das zumindest im wesentlichen radial auswärtsgerichtet ist. Dies führt zu einem festen Verspannen des wulstringartigen Abschnitts 14 des Dichtungselementes 3 zwischen dem federelastischen Stützring 7 und der Innenwand der Hülse 2. Dieses Verspannen und Fixieren des manschettenartigen Dichtungselementes 3 bewirkt, daß beim anschließenden radialen Aufweiten und axial einwärts gerichteten Umschlagen des Dichtungsringes 4 das Dichtungselement 3 und der einstückig damit ausgebildete Dichtungsring 4 gegen eine axiale Verschiebung fixiert sind. Dabei ist bei endgültig eingeschobenem Rohrspitzende 19 zur Verstärkung des radial einwärts wirkenden Dichtungsdruckes der Dichtungsring 4 mit seiner nach dem Umschlagen radial auswärts weisenden Fläche 21 auf der Wulst 6 abgestützt. Wenn jetzt auf das Rohrspitzende 19 eine Querkraft in Form einer Scherlast oder einer Knickkraft einwirkt, muß diese nicht mehr von dem Dichtungsring 4 und der unterstützenden Wulst 6 aufgefangen werden, sondern wird eine solche Querkraft zumindest fast ausschließlich von dem federelastischen Stützring 7 aufgefangen, in dem in den Figuren 1 und 2 dargestellten Ausführungsbeispiel also durch das den Schenkeln 8, 9 bzw. den Federzungen 17 des federelastischen Stützringes 7 aufgeprägte Biegeelement.

An seiner Stirnseite ist das eingeschobene Rohrspitzende durch in der Zeichnung nicht dargestellte elastische Scherlaststützen abgestützt, die in Form axial verlaufender Rippen ausgebildet sind.

**Patentansprüche**

1. Steckmuffe zur Herstellung einer abgedichteten Rohrsteckverbindung mit mindestens einem in die Steckmuffe einzusetzenden Rohrspitzende (19), mit einer im wesentlichen zylindrischen, an einer Stirnseite offenen Hülse (2), an deren Innenwand mindestens ein ringförmiges Dichtungselement (3) angeordnet ist, einem federelastischen Stützring (7), der axial außen vor dem oder vor dem ersten ringförmigen Dichtungselement (3) angeordnet und als Federzungenring mit in Umfangsrichtung voneinander distanzierten Federzungen (17) ausgebildet ist und der an der Hülse (2) gehaltert ist und im entspannten Zustand einen lichten Innendurchmesser hat, der kleiner als der innerhalb eines Fertigungstoleranzbereiches kleinste zulässige Außendurchmesser des in die Steckmuffe einzusteckenden Rohrspitzendes ist, dadurch gekennzeichnet, daß die Federzungen (17) je zwei Schenkel (8, 9) aufweisen, die sich axial einwärts zum Muffenspiegel bzw. Muffengrund öffnend, V-förmig ausgebildet sind und im entspannten Zustand jeweils der eine Schenkel (8) im wesentlichen radial nach innen und der andere Schenkel (9) im wesentlichen axial in die Steckmuffe (1) hinein zeigt.

2. Steckmuffe nach Anspruch 1, dadurch gekennzeichnet, daß an den ringförmigen Dichtungselementen (3, 4) angeformte Halteorgane oder entsprechend ausgebildete Ringabschnitte (14) so angeordnet sind, daß sie bei eingestecktem Rohrspitzende (19) zwischen dem sich im wesentlichen axial erstreckenden Schenkel (9) des V-förmigen federelastischen Stützringes (7) und der Innenwand der Hülse (2) axial fixierend, radial eingespannt sind.

3. Steckmuffe nach Anspruch 1 oder 2, gekennzeichnet durch eine formsteife oder formstabile Hülse (2) und ein gummielastisches Dichtungselement (3), an das ein Dichtungsring (4) einstückig angeformt ist.

4. Steckmuffe nach einem der Ansprüche 1 bis 3, bei der der federelastische Stützring (7) mit einem Haltering (11) verbunden ist, der den axial außenliegenden Kragen (5) der Hülse (2) übergreift, dadurch gekennzeichnet, daß der Haltering (11) durch eine blockierend einrastende Schnappverbindung (12, 13) am Außenmantel der Hülse (2) befestigt ist.

5. Steckmuffe nach einem der Ansprüche 1 bis 4, dadurch gekennzeichnet, daß in der Steckmuffe (1) axial innen hinter dem ringförmigen Dichtungsring (4) eine elastische Stütze zur Aufnahme der Scherlast des Kragens des einzusteckenden Rohrspitzendes (19) in Form axialer Rippen oder Stege oder Noppen vorgesehen ist, die im gleichen radialen Winkelabstand voneinander angeordnet sind.

6. Steckmuffe nach einem der Ansprüche 1 bis 5, dadurch gekennzeichnet, daß die Hülse (2) aus Stahlblech und der federelastische Stützring (7) und gegebenenfalls der Haltering (11) aus Kunststoff bestehen.

## Claims

1. Insert sleeve for providing a tight pipe connection comprising at least one pipe end (19) to be inserted into said insert sleeve, a casing (2) which is substantially cylindrical and open on at least one side, at least one annular sealing element (3), which is arranged on the inner wall of said casing, a flexible supporting ring (7) which is placed axially outwardly in front of the annular sealing member (3) and which ring comprises radially spaced tongues (17) and is mounted on the casing (2) and in its relaxed state has an inner diameter smaller than the within an admissible manufacturing tolerance smallest outer diameter of the pipe end to be inserted into the insert sleeve, characterized in that the tongues (17) each comprise two legs (8, 9) standing in a V-shaped configuration and opening inside the sleeve in axial direction to the ground of the sleeve, one of said legs (8), with reference to the relaxed state of said ring (7), pointing substantially radially inwardly and the other leg (9) pointing substantially axially inwardly with respect to the sleeve (1).

2. Insert sleeve according to claim 1, characterized in that holding means formed on the annular sealing elements (3, 4) or correspondingly formed ring sections (14) are arranged in such a manner that while the pipe end (19) being inserted they are clamped radially so as to be fixed between the axially extending leg (9) of the V-shaped flexible supporting ring (7) and the inner wall of the casing (2).

3. Insert sleeve according to claim 1 or 2, characterized by a rigid and flexible or inflexible shape-retaining casing (2) and a flexible sealing element (3) made of rubber with a sealing ring (4) integrally shaped thereon.

4. Insert sleeve according to one of the claims 1 to 3, in which the flexible supporting ring (7) is connected to a holding ring (11) extending over the axially external collar (5) of the casing (2), characterized in that the holding ring (11) is fixed to the outer surface of the casing (2) by a locking snatch device (12, 13).

5. Insert sleeve according to one of the claims 1 to 4, characterized in that in the insert sleeve (1) axially inwardly behind the annular sealing ring (4) there is provided an elastic support in the form of axial ribs or crosspieces or burls radially equally spaced from each other for carrying the shear load of the collar of the pipe end (19) to be inserted.

6. Insert sleeve according to one of the claims 1 to 5, characterized in that the casing (2) is made of sheet steel and the flexible supporting ring (7) and optionally the holding ring (11) are made of plastics.

## Revendications

1. Manchon permettant la réalisation d'un assemblage de tubes étanches comportant au moins une extrémité de tube (19) qui doit s'engager dans le manchon, une douille (2) essentiellement cylindrique, ouverte à son extrémité frontale et comportant, sur sa paroi intérieure, au moins un élément d'étanchéité annulaire (3), une bague d'appui élastique (7), placée à l'extérieur dans le sens axial en avant du premier élément d'étanchéité annulaire (3) et constituée par un anneau à languettes comportant des languettes élastiques (17) situées à une certaine distance les unes des autres dans le sens périphérique, qui est maintenue contre la douille (2) et, qui en l'absence de contraintes, présente un diamètre intérieur ayant une grandeur inférieure à la plus petite valeur admissible, dans le domaine des tolérances de fabrication, pour le diamètre extérieur de l'extrémité de tube qui doit s'engager dans le manchon, caractérisé en ce que les languettes élastiques (17) comportent chacune deux branches (8, 9) qui forment un V qui s'ouvre vers l'intérieur dans le sens axial vers le fond du manchon et en ce que, en l'absence de contraintes, l'une des branches (8) est orientée essentiellement dans le sens radial vers l'intérieur tandis que l'autre branche (9) est orientée essentiellement dans le sens axial vers l'intérieur du manchon (1).

2. Manchon selon la revendication 1, caractérisé en ce que les éléments d'étanchéité annulaires (3, 4) comportent des organes de maintien ou des secteurs annulaires (14) de forme convenable disposés de telle manière que, lorsque l'extrémité (19) du tube est engagée, ils sont serrés dans le sens radial, de manière à être fixés dans le sens axial entre la branche (9) de la bague d'appui élastique (7) en V qui s'étend essentiellement dans le sens axial et la paroi intérieure de la douille (2).

3. Manchon selon l'une des revendications 1 ou 2, caractérisé en ce qu'il comporte une douille (2) rigide et indéformable et un élément d'étanchéité (3) en caoutchouc élastique dans lequel une bague d'étanchéité (4) est réalisée par moulage.

4. Manchon selon l'une des revendications 1 à 3, dans lequel la bague d'appui élastique (7) est reliée à une bague de maintien (11) qui enserre le collier (5) de la douille (2) situé à l'extérieur dans le sens axial, caractérisé en ce que la bague de maintien (11) est fixée à la surface extérieure de la douille (2) par un dispositif de liaison (12, 13) d'arrêt et de blocage.

5. Manchon selon l'une des revendications 1 à 4, caractérisé en ce que le manchon (1) comporte, à l'intérieur et en arrière de la bague d'étanchéité (4) dans le sens axial, un dispositif d'appui élastique qui absorbe la charge de cisaillement du collier de l'extrémité de tube (19) engagée dans le manchon et qui est constitué par des nervures, des bandes ou des saillies qui sont réparties dans le sens radial à des distances angulaires égales.

6. Manchon selon l'une des revendications 1 à 5, caractérisé en ce que la douille (2) est en tôle d'acier et que la bague d'appui élastique (7) et, le cas échéant, la bague de maintien (11) sont en matière plastique.

Fig. 1

Fig. 2